# FASCICULE DE BREVET EUROPEEN

(11) **EP 3 983 188 B1**
(45) Date de publication et mention de la délivrance du brevet: **20.03.2024**
(21) Numéro de dépôt: 20742330.2
(22) Date de dépôt: 12.06.2020
(51) Int. Cl.: B28B 1/00, B28B 3/26, B28B 23/18, B29C 48/02, B29C 48/16, B29C 48/285, B29C 48/92, B33Y 30/00, B33Y 70/10, B29C 48/00

(54) **PROCÉDÉ DE FABRICATION D'UN BÉTON FIBRÉ ANISOTROPE**
VERFAHREN ZUR HERSTELLUNG EINES ANISOTROPEN FASERBETONS
METHOD FOR MANUFACTURING AN ANISOTROPIC FIBROUS CONCRETE

(30) Priorité: 14.06.2019 FR 1906424
(43) Date de publication de la demande: 20.04.2022
(73) Titulaire: Ecole Nationale des Ponts et Chaussées, 77455 Marne La Vallee Cedex 2 (FR)
(72) Inventeur: DUCOULOMBIER, Nicolas, 75015 PARIS (FR); CARON, Jean-François, 78220 VIROFLAY (FR)
(74) Mandataire: Brevalex
(86) Numéro de dépôt international: PCT/FR2020/051006
(87) Numéro de publication internationale: WO 2020/249913

(56) Documents cités:
- EP-A2- 0 172 028
- WO-A1-2013/064826
- CA-A1- 3 046 155
- CN-A- 108 638 290
- CN-A- 108 952 004

## Description

### DOMAINE TECHNIQUE

La présente invention se rapporte à un procédé de fabrication additive par extrusion de béton fibré anisotrope.

### ÉTAT DE LA TECHNIQUE ANTÉRIEURE

On connaît de la technique antérieure des bétons fibres, c'est-à-dire des mortiers de ciment ou d'argile renforcés au moyen de fibres métalliques, végétales, minérales ou synthétiques.

Comme cela est connu en soi, l'adjonction de fibres au mortier peu ou très faiblement orientées permet de conférer au béton final des propriétés mécaniques (quasi isotropes) améliorées, notamment une meilleure résistance aux efforts de cisaillement et à la fissuration.

Comme cela est connu également, un mortier peut aussi être renforcé plus localement par des éléments longilignes et orientés, barres d'acier ou de composite, câbles, fils, ce qui permet de conférer à l'élément béton fabriqué une meilleure résistance aux efforts de tension en donnant à l'ensemble de la ductilité puisque l'élément ne casse pas après la première fissure due à des efforts de traction.

CN 108 952 004 A divulgue un procédé de fabrication additive par extrusion de béton fibré anisotrope suivant le préambule de la revendication 1.

La présente invention vise à fournir un procédé de fabrication d'un matériau béton fibré anisotrope présentant des caractéristiques mécaniques améliorées par rapport à celles des techniques antérieures.

### EXPOSÉ DE L'INVENTION

On atteint ce but de l'invention avec un procédé de fabrication additive par extrusion de béton fibré anisotrope suivant la revendication 1.

Grâce à ce procédé, on peut orienter les fibres continues selon une direction privilégiée à l'intérieur du mortier et obtenir un arrangement optimal de ces fibres, conférant au boudin de béton final une anisotropie permettant une excellente résistance notamment aux efforts de traction de ce boudin.

On peut obtenir, grâce à ce principe d'extrusion d'un boudin en continu un béton présentant un taux de fibres important selon la direction longitudinale du boudin, typiquement de 5 à 10 % voire davantage dans une section perpendiculaire à cette direction, contre de l'ordre de 3% maximum pour un béton fibré de la technique antérieure, obtenu par mélange, brassage, des fibres dans un batch de mortier avant moulage ou extrusion, et donc sans orientation réellement privilégiée : les fibres sont plus ou moins aléatoirement orientées. Au-delà de ces 3% le mélange est de plus difficilement manipulable (pelote de fibres, bourrage des systèmes).

Le fait d'introduire des fibres continues de quelques dizaines de microns de diamètre, que l'on différenciera ici de fils en général millimétriques, et en grand nombre, permet l'élaboration d'un matériau profondément différent de ce qui existe classiquement. Un tel assemblage fibres/matrice permet un fonctionnement mécanique similaire à celui des matériaux composites classiques, carbone/epoxy par exemple, en ce sens que l'on peut considérer à une certaine échelle le bi-matériau homogène, ce qui signifie un comportement mécanique identique en tout point de la section du boudin.

Ceci est effectivement le cas car la répartition quasi homogène d'un grand nombre de fibres dans la pâte, permet une distribution des efforts optimale, les fibres reprenant les efforts de tension et la matrice assurant par cisaillement la bonne répartition.

Ce n'est pas le cas pour des boudins renforcés par des éléments de plus grande section et en petit nombre (barres ou fils) qui ont plus un comportement de structure armée qu'un comportement matériau.

Ainsi cette meilleure distribution permet une microfissuration mieux répartie, évitant ainsi des macrofissures importantes dans le sens perpendiculaire au cordon à l'état durci. Elle permet également une tenue du boudin durant le process (rhéologie, à l'état frais) très différente, car le mortier est bien mieux « tenu » grâce aux fibres ce qui est très intéressant pour la dépose par procédés de fabrications additive (sans moule) par exemple.

Les fibres de faible diamètre sont également plus faciles à entraîner par la pâte lors de l'extrusion car le rapport entre leur surface de contact avec la pâte et leur masse/rigidité est favorable. On pourra éviter ainsi plus facilement la motorisation rapidement nécessaire pour entraîner câbles ou gros fils.

Enfin utiliser des fibres de petit diamètre, ayant donc une rigidité de flexion faible, confère au boudin une meilleure maniabilité en ce sens que l'on peut le courber davantage lors de la dépose via un procédé additif.

L'invention concerne également un procédé ainsi défini, dans lequel l'ensemble d'extrusion comporte un mélangeur de mortier situé en amont de la buse d'extrusion.

L'invention concerne également un procédé ainsi défini, dans lequel ledit ensemble d'extrusion comporte une zone d'étranglement située entre ledit mélangeur et ladite buse d'extrusion.

L'invention concerne également un procédé ainsi défini, dans lequel les moyens d'injection de l'additif d'accélération de prise comprennent une tête d'injection située entre le mélangeur et la zone d'étranglement pour injecter l'additif d'accélération de prise.

L'invention concerne également un procédé ainsi défini, dans lequel ladite buse d'extrusion comporte des ponts radiaux munis d'orifices d'introduction desdites fibres.

L'invention concerne également un procédé ainsi défini, dans lequel ladite buse d'extrusion comporte des orifices périphériques d'introduction desdites fibres.

L'invention concerne également un procédé ainsi défini, dans lequel le dispositif comporte un magasin de bobines sur lesquelles sont enroulées lesdites fibres, et des organes de guidage desdites fibres desdites bobines vers ladite buse d'extrusion.

L'invention concerne également un procédé ainsi défini, comportant la mise en oeuvre d'un système d'approvisionnement et de pompage dudit mortier vers ledit mélangeur.

L'invention concerne également un procédé ainsi défini, dans lequel c'est l'adhérence des fibres avec le mortier qui entraîne ces fibres dans le boudin.

L'invention concerne également un procédé ainsi défini, dans lequel on soumet lesdites fibres à un traitement de surface et/ou à un traitement mécanique avant extrusion avec ledit mortier.

L'invention concerne également un procédé ainsi défini, dans lequel on utilise des fibres souples en flexion que l'on introduit à coeur dans ledit mortier.

L'invention concerne également un procédé ainsi défini, dans lequel on utilise des fibres rigides en flexion que l'on introduit en périphérie dudit mortier.

L'invention concerne également un procédé ainsi défini, dans lequel on choisit lesdites fibres dans le groupe comprenant les fibres en carbone, en métal, en verre, en basalte, en polymère, unitaires ou toronnées.

### BRÈVE DESCRIPTION DES DESSINS

D'autres caractéristiques et avantages de la présente invention apparaîtront à la lecture de la description qui va suivre, et à l'examen des figures ci-annexées, dans lesquelles :
La figure 1 est une vue d'ensemble en perspective d'un exemple d'installation;
La figure 2 est une vue en coupe axiale d'un mode de réalisation d'un ensemble d'extrusion ;
La figure 3 est une vue de côté de la buse d'extrusion de l'ensemble de la figure 2 ;
La figure 4 est une vue en perspective de cette buse ;
La figure 5 est une vue en coupe transversale de cette buse, prise selon le plan de coupe V-V de la figure 4 ;
La figure 6 est une vue analogue à celle de la figure 2, avec un mélange de mortier et de fibres en cours d'extrusion ;
La figure 7 est une vue en coupe transversale du boudin de béton extrudé par l'ensemble d'extrusion de la figure 2 ;
La figure 8 est une vue en coupe axiale d'un autre mode de réalisation d'un ensemble d'extrusion;
La figure 9 est une vue de côté de la buse d'extrusion de l'ensemble de la figure 8 ;
La figure 10 est une vue en perspective de cette buse ;
La figure 11 est une vue en coupe transversale de cette buse, prise selon le plan de coupe XI-XI de la figure 9 ;
La figure 12 est une vue analogue à celle de la figure 8, avec un mélange de mortier et de fibres en cours d'extrusion ; et
La figure 13 est une vue en coupe transversale du boudin de béton extrudé par l'ensemble d'extrusion de la figure 8 ;
La figure 14 est une vue générale montrant l'ajout d'accélérateur dans l'ensemble d'extrusion.

### EXPOSÉ DÉTAILLÉ DE MODES DE RÉALISATION PARTICULIERS

Sur l'ensemble de ces figures, des références identiques ou analogues désignent des organes ou ensembles d'organes identiques ou analogues.

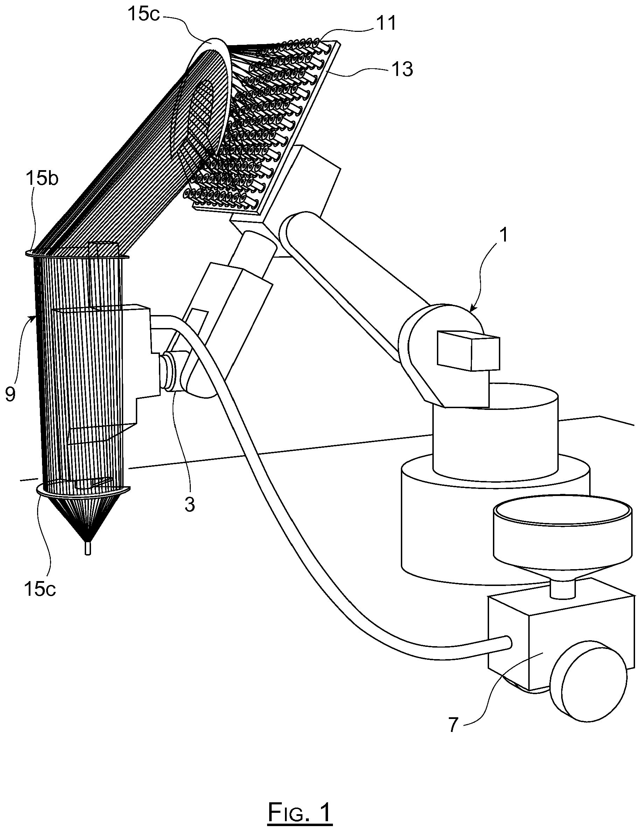

On se reporte à présent à la figure 1, sur laquelle on a représenté une installation de fabrication d'un béton fibré.

Comment on peut le voir sur cette figure, cette installation comprend un robot 1 tel qu'un robot 6 axes disponible dans le commerce, fabriqué par exemple par la société ABB.

Sur la tête 3 de ce robot est monté un dispositif.

Ce dispositif comprend un ensemble d'extrusion 5 alimenté d'une part par une pompe à mortier 7 et d'autre part par des fibres continues 9 provenant de bobines 11 installées sur un magasin 13, et guidées par une pluralité de guides-fils 15a, 15b, 15c.

Les fibres continues peuvent être par exemple en carbone, en métal, en verre, en basalte, en polymère, ou en association de ces divers matériaux. Il s'agit de fibres de petit diamètre, c'est-à-dire de l'ordre de grandeur du micron plutôt que du millimètre (sauf pour le fil métallique pouvant atteindre 100 microns). Ces fibres sont en général disponibles assemblées en fil regroupant quelques milliers de fibres et constituant un fil ayant un diamètre de l'ordre de grandeur du millimètre.

Les bobines 11 peuvent être entraînées en rotation par la seule traction des fibres 9, oui bien être assistées en rotation par des moyens de motorisation.

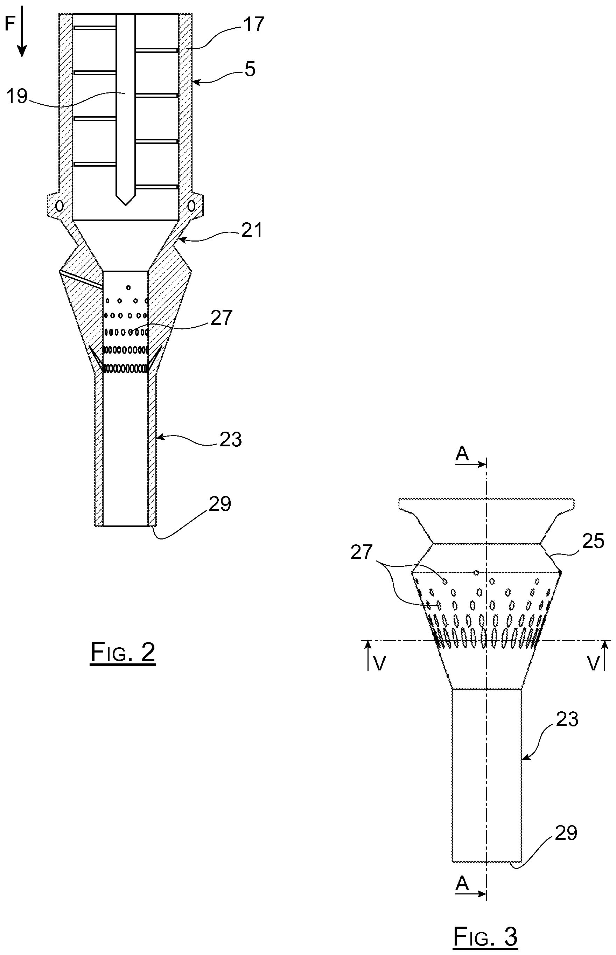

On se reporte à présent à la figure 2, sur laquelle on a représenté un premier mode de réalisation d'un ensemble d'extrusion 5 du dispositif.

Sur cette figure, la direction de circulation du mortier et des fibres est indiquée par la flèche F : les termes « amont » et « aval » s'entendront dans ce qui suit par rapport au sens de cette flèche.

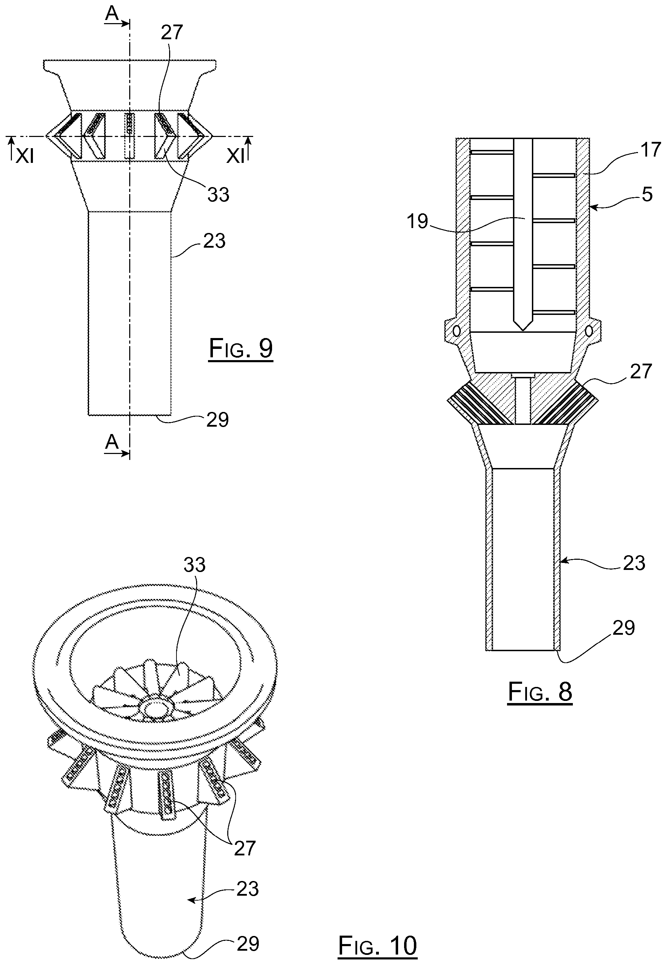

Ce premier mode de réalisation convient tout particulièrement à des fibres 9 présentant une relative rigidité, c'est-à-dire une résistance aux efforts de flexion relativement importante. Ces fibres suffisamment rigides peuvent bien se tenir et pénéterer en se répartissant dans la section du cordon, y compris dans la zone centrale. Un autre dispositif pour de telles fibres plus souples est décrit plus loin et fait l'objet des figures 8 à 13.

L'ensemble d'extrusion 5 comporte, dans sa partie amont, un mélangeur de mortier 17 de forme sensiblement cylindrique à l'intérieur duquel peut tourner une hélice de mélange 19 sous l'action d'un moteur (non représenté). Ce mélangeur est prolongé, dans sa partie aval, par une zone d'étranglement 21 de forme sensiblement conique.

Cette zone d'étranglement 21 est elle-même prolongée, dans sa partie aval, par une buse d'extrusion 23 dont la partie intérieure est sensiblement cylindrique, de diamètre inférieur à celui du mélangeur 17.

Comme cela est visible sur les figures 2, 3, 4, et 5, dans sa partie amont, cette buse d'extrusion 23 présente un renflement périphérique 25 muni d'orifices périphériques traversant 27 répartis de manière régulière, tant circonférentiellement qu'axialement.

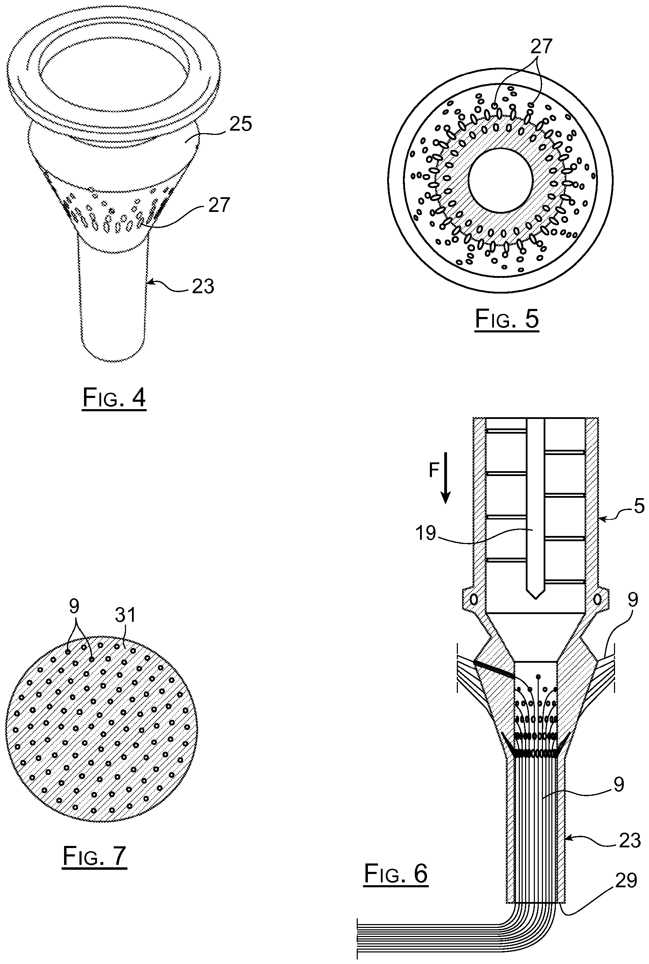

Comme cela est visible sur la figure 6, ces orifices périphériques 27 sont prévus pour accueillir les fibres 9 représentées à la figure 1, provenant des bobines 11 disposées sur le magasin 13.

Le mode de fonctionnement de l'installation résulte directement de la description qui précède.

Cette installation permet de fabriquer un boudin de béton fibré anisotrope, qui sort par extrusion de la buse 23.

Le robot 1 conduit l'extrémité 29 de la buse d'extrusion 23 vers la zone où l'on souhaite déposer le boudin de béton fibré : ce peut-être par exemple sur une zone où l'on souhaite fabriquer une paroi en béton par impression additive, c'est-à-dire par superposition de boudins de béton fibré.

On introduit alors un mortier (par exemple mélange de ciment ou argile avec des granulats) dans la pompe à mortier 7, de manière à l'envoyer dans le mélangeur 17 de l'ensemble d'extrusion 5, où il est alors malaxé par l'hélice 19.

Si nécessaire, on incorpore à ce mortier, dans le mélangeur 17, différents adjuvants permettant d'en modifier les caractéristiques physiques et/ou chimiques, en vue notamment d'assurer sa parfaite compatibilité et adhérence avec les fibres 9.

Les paramètres (temps, vitesse...) de mélange du mortier dans le mélangeur 17 sont adaptés aux caractéristiques rhéologiques, c'est-à-dire in fine à la viscosité et au seuil de cisaillement recherchés.

Le mortier est ensuite poussé par l'hélice 19 à l'intérieur de la zone d'étranglement 21, où il subit de ce fait des efforts de cisaillement contribuant la bonne homogénéité du mélange.

Lorsque le mortier arrive ensuite dans la buse 23, il rencontre les fibres 9 provenant des bobines 11, et conduites par les guides-fils 15a, 15b, 15c jusqu'à l'intérieur des orifices périphériques 27.

Avantageusement, ces fibres, qui peuvent consister en simples fibres de petit diamètres (i.e. de l'ordre de grandeur du micron), en fils, en câbles ou en torons de fils ou de câbles, auront pu subir, lors de leur fabrication ou bien entre leur dévidement des bobines 11 et leur arrivée dans les orifices périphériques 27, différents traitements physico-chimiques (attaque de surface, pré-imprégnation...) ou mécaniques (mise sous tension, rattrapage de jeu...) visant à optimiser l'adhérence de ces fibres avec le mortier.

Ce faisant, le mortier, entraîne et incorpore ces fibres 9 en circulant à l'intérieur de la buse d'extrusion 23 ; les caractéristiques de cette buse (longueur, diamètre intérieur) sont déterminées de manière à permettre au mortier d'atteindre un seuil de cisaillement (i.e. force nécessaire pour provoquer l'écoulement du mortier) suffisant pour annuler la vitesse relative du mortier par rapport aux fibres.

Il faut comprendre que c'est uniquement l'adhérence du mortier aux fibres 9 qui permet d'entraîner celles-ci avec le mouvement du mortier.

En sortie de l'extrémité 29 de la buse 23, on peut alors obtenir un boudin de béton fibré dont la section transversale type est représentée sur la figure 7 : dans ce premier mode de réalisation, les fibres 9 sont réparties de manière sensiblement homogène sur toute la section de la matrice 31 formée par le mortier qui se solidifie au bout d'un certain temps.

Typiquement, ce procédé d'extrusion des fibres continues 9 avec le mortier permet d'obtenir, en section, de 5 à 10% ou même davantage de fibres 9 alignées dans l'axe du boudin par rapport à la matrice 31, contrairement aux bétons fibres isotropes de la technique antérieure, avec lesquels on arrive difficilement à dépasser les 3% de fibres plus ou moins aléatoirement distribuées dans toutes les directions : on peut donc parler d'une grande densité de fibres alignées par rapport aux bétons de la technique antérieure, et donc de mortier anisotrope puisque le boudin aura bien un comportement mécanique différent et plus performant dans le sens du boudin que dans le sens transverse.

En théorie, on pourrait même obtenir une densité de fibres beaucoup plus importante, la seule limite physique étant que les distances inter-fibres ne peuvent pas être inférieures aux plus gros granulats contenus dans le mortier qu'il conviendrait de choisir le plus petit possible si l'on souhaitait augmenter cette densité.

On peut noter que les différents paramètres entrant en jeu, comme par exemple le temps et la vitesse de mélange du mortier dans le mélangeur 17, la géométrie de la zone d'étranglement 21, la densité et la répartition géométrique des orifices périphériques 27, le diamètre et la longueur de la buse 23, les caractéristiques et quantités des adjuvants du mortier, la nature des fibres 9 et les caractéristiques des traitements qui leur sont appliqués,... sont fonction des caractéristiques physico-chimiques (notamment rhéologie) que l'on souhaite obtenir pour le boudin de béton en sortie de la buse d'extrusion 23.

On notera que le rapport entre la section de la buse d'extrusion 23 et les sections cumulées des fibres 9 caractérise la densité de fibres que l'on obtient à l'intérieur de la matrice 31.

Les figures 8 à 13 représentent un autre mode de réalisation d'ensemble d'extrusion 5 du dispositif, convenant pour des fibres relativement souples, c'est-à-dire présentant une résistance en flexion relativement faible.

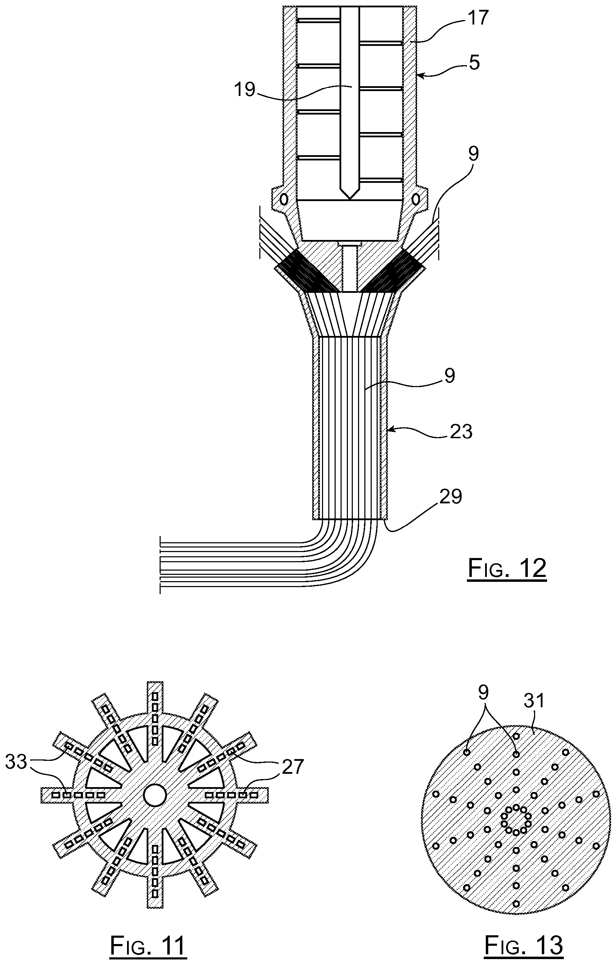

Dans cet autre mode de réalisation, les orifices 21 d'introduction des fibres 9 sont répartis sur des ponts radiaux 33, permettant de répartir radialement ces fibres entre la périphérie de la buse d'extrusion 23 et le centre de celle-ci, et ainsi d'obtenir dans la matrice de mortier 31 visible sur la figure 13, une disposition de ces fibres en « rayon de soleil ». Ce dispositif permet un meilleur guidage des fibres que celui décrit en relation avec les figures 4 à 6 destinées à des fibres plus rigides. Cette répartition des orifices sur les ponts radiaux 33 permet d'aider les fibres souples à pénétrer à coeur du boudin de mortier (qui passe par les espaces vides restants qui apparaissent sous forme de triangles blancs situés entre les ponts radiaux 33 sur la figure 11), et d'éviter qu'elles ne soient rejetées en périphérie par le flux de mortier (ce qui se passerait avec un dispositif représenté sur les figures 4 à 10.

Comme on peut le comprendre à la lumière de ce qui précède, la présente invention permet d'obtenir un boudin de béton fibré muni de fibres longitudinales parfaitement réparties, présentant donc des caractéristiques physico-chimiques réglables à façon avant la prise du mortier, en fonction de l'usage que l'on souhaite faire de ce boudin.

Une fois que le mortier s'est solidifié, on obtient un boudin de béton fibré anisotrope dont la résistance aux différents efforts (notamment de traction) est nettement supérieure à celle obtenue avec les bétons fibrés de la technique antérieure, et qui se comporte à la manière d'un matériau composite comprenant une matrice et un arrangement géométrique particulier de fibres.

On peut en particulier limiter considérablement le risque de fissuration de ce béton fibré anisotrope.

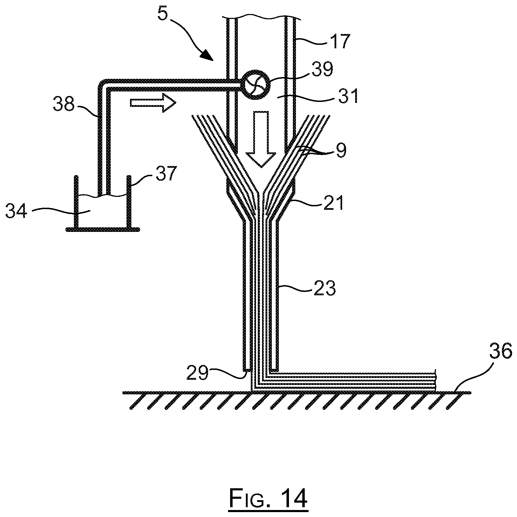

Comme illustré sur la figure 14, un additif d'accélération de prise 34 est ajouté au mortier 31 dans l'ensemble d'extrusion 5 avant dépôt de ce mortier par l'extrémité 29, pour assurer que le boudin de mortier 31 déposé prend rapidement après son dépôt sur un support 36, ce support 36 pouvant être un boudin de mortier précédemment déposé.

Dans ces conditions, le mortier déposé par la buse 23 sur du mortier préalablement déposé par cette même buse est ainsi supporté par du mortier qui est déjà pris, grâce à l'ajout d'accélérateur, ce qui permet d'exécuter un cycle d'impression additive avec une rapidité appropriée.

L'ajout de l'additif 34 autorise de générer au niveau de l'extrémité 29 un boudin de mortier suffisamment flexible ou liquide pour qu'il puisse être légèrement écrasé ou pressé sur le support 36 qui s'étend à peu près perpendiculairement à l'orientation de la buse 23, ce support 36 pouvant lui-même être une couche précédemment déposée par impression 3D.

Cette faible consistance lors du dépôt autorise un angle entre la buse et le support plus ou moins quelconque et évite pour les dépôts courbes d'avoir recours à un degré de rotation supplémentaire de la buse autour de son axe. Une telle rotation supplémentaire serait nécessaire si le boudin sortait de l'extrémité 29 avec une consistance élevée en ayant par conséquent une forme complètement définie par la forme de la buse. Sans ajout d'additif au niveau de la tête 39, le matériau devrait avoir dès la sortie du mélangeur 17 une consistance élevée pour permettre d'empiler les couches, ce qui ne permettrait pas d'écrasement lors du dépôt.

Comme visible sur la figure 14, la buse 23 a une orientation approximativement perpendiculaire au support 36, et elle est déplacée parallèlement à celui-ci, conformément au processus d'impression 3D. Le fait que la buse 23 génère un matériau flexible permet d'assurer un dépôt approprié du boudin, et le fait qu'il contient l'additif 34 assure qu'il prend suffisamment vite pour constituer un support rigide formant une assise stable pour recevoir un autre boudin de mortier.

En d'autres termes, grâce à l'ajout d'additif, il est possible d'utiliser un mortier qui est très flexible ou liquide au moment où il sort de la buse 23, tout en ayant l'assurance que ce mortier prendra rapidement après son dépôt.

En pratique, l'additif 34 est ajouté le plus tardivement possible dans le mortier pour permettre à ce mortier à la fois d'être flexible lors de sa sortie de la buse et de prendre rapidement après avoir été déposé.

A ce titre, et comme illustré sur la figure 14, l'additif 34 est ajouté au mortier 31 directement dans l'ensemble d'extrusion 5. L'additif 34 est contenu dans un récipient 37 pouvant être porté par l'ensemble 5, et il est injecté dans le mortier 31 en aval du mélangeur 17 et en amont de la zone d'étranglement 21. En pratique, l'additif 34 est acheminé depuis son récipient 37 vers le mortier 31 par un conduit 38 dont l'extrémité située dans le mortier 31 est équipée d'une tête d'injection 39 assurant la diffusion de l'additif dans le flux de mortier 31 qui provient du mélangeur 17 et qui s'engage dans l'étranglement 21.

Le fait de disposer au niveau de la tête d'injection 39 d'un mortier 31 relativement fluide permet de mieux imprégner les fibres 9 qui sont introduites juste après. Ceci constitue une condition importante pour le fonctionnement mécanique du béton anisotrope, l'imprégnation étant d'autant plus efficace que le mortier est liquide.

Le fait d'utiliser un mortier dont la viscosité augmente rapidement après avoir passé la tête d'injection 39, grâce à l'ajout de l'accélérateur, assure un cisaillement important entre le mortier et les fibres pour que le flux de mortier 31 entraine avec lui les fibres 9, ce qui permet de dévider les bobines sans recours à un dispositif extérieur.

En pratique, lors de son arrivée au niveau de la tête d'injection 39, le mortier a une viscosité se caractérisant par un seuil de cisaillement valant approximativement 100Pa, et cette viscosité augmente jusqu'à un seuil de cisaillement compris approximativement entre 600Pa et 1000Pa au niveau de l'extrémité 29 de la buse 23, dans le cas d'une buse ayant par exemple une longueur de 10 cm. La valeur du seuil de cisaillement au niveau de l'extrémité 29 peut être diminuée si la buse 23 est plus longue, la longueur d'entraînement des fibres par le mortier étant alors plus importante.

D'une manière plus générale, la nature du mortier, de l'additif d'accélération, et le débit de mortier sont avantageusement ajustés pour que le seuil de cisaillement soit multiplié par au moins six entre la zone d'injection de l'additif et l'extrémité 29 de la buse 23.

## Revendications

1. Procédé de fabrication additive par extrusion de béton fibré anisotrope, mettant en oeuvre un dispositif comportant un ensemble d'extrusion (5) incluant une buse d'extrusion (23) pour extruder un boudin de mortier (31) conjointement avec des fibres continues (9) orientées selon la direction longitudinale de ce boudin, **caractérisé en ce que** le dispositif comporte un robot multi-axe (1) ayant une tête (3) portant ledit ensemble d'extrusion (5) et **en ce que** ledit ensemble d'extrusion (5) comporte des moyens d'injection dans le mortier (31) d'un additif d'accélération de prise (34), l'injection de l'additif d'accélération de prise (39) provoquant une multiplication par au moins six du seuil de cisaillement du mortier (31) entre la région d'injection de l'additif d'accélération de prise (39) et l'extrémité (29) de la buse (23).

2. Procédé selon la revendication 1, dans lequel l'ensemble d'extrusion (5) comporte un mélangeur de mortier (17) situé en amont de la buse d'extrusion (23).

3. Procédé selon la revendication 2, dans lequel ledit ensemble d'extrusion (5) comporte une zone d'étranglement (21) située entre ledit mélangeur (17) et ladite buse d'extrusion (23).

4. Procédé selon la revendication 3, dans lequel les moyens d'injection de l'additif d'accélération de prise (34) comprennent une tête d'injection (39) qui est située entre le mélangeur (17) et la zone d'étranglement (21) pour injecter l'additif d'accélération de prise (34).

5. Procédé selon la revendication 1, dans lequel ladite buse d'extrusion (23) comporte des ponts radiaux (33) munis d'orifices (27) d'introduction desdites fibres (9).

6. Procédé selon la revendication 1, dans lequel ladite buse d'extrusion (23) comporte des orifices périphériques (27) d'introduction desdites fibres (9).

7. Procédé selon la revendication 1, dans lequel le dispositif comporte un magasin (13) de bobines (11) sur lesquelles sont enroulées lesdites fibres (9), et des organes de guidage (15a, 15b, 15c) desdites fibres (9) desdites bobines (11) vers ladite buse d'extrusion (23).

8. Procédé selon la revendication 2, comportant la mise en oeuvre d'un système d'approvisionnement et de pompage (7) dudit mortier (31) vers ledit mélangeur (17).

9. Procédé selon la revendication 1, dans lequel c'est l'adhérence des fibres (9) avec le mortier (31) qui entraine ces fibres dans le boudin.

10. Procédé selon la revendication 1, dans lequel on soumet lesdites fibres (9) à un traitement de surface et/ou à un traitement mécanique avant extrusion avec ledit mortier (31).

11. Procédé selon la revendication 1, dans lequel on utilise des fibres (9) souples en flexion que l'on introduit à coeur dans ledit mortier (31).

12. Procédé selon la revendication 1, dans lequel on utilise des fibres (9) rigides en flexion que l'on introduit en périphérie dudit mortier (31).

13. Procédé selon la revendication 1, dans lequel on choisit lesdites fibres (9) dans le groupe comprenant les fibres en carbone, en métal, en verre, en basalte, en polymère, unitaires ou toronnées.

## Patentansprüche

1. Verfahren zur additiven Herstellung von anisotropem Faserbeton durch Extrusion, das eine Vorrichtung verwendet, die eine Extrusionseinheit (5) beinhaltet, die eine Extrusionsdüse (23) einschließt zur Extrusion eines Mörtelwulstes (31) zusammen mit Endlosfasern (9), die entlang der Längsrichtung dieses Wulstes ausgerichtet sind, **dadurch gekennzeichnet, dass** die Vorrichtung einen mehrachsigen Roboter (1) beinhaltet, der einen Kopf (3) aufweist, der die Extrusionseinheit (5) trägt, und dass die Extrusionseinheit (5) Mittel zum Einspritzen eines Abbindebeschleuniger-Additivs (34) in den Mörtel (31) beinhaltet, wobei das Einspritzen des Abbindebeschleuniger-Additivs (39) eine mindestens sechsfache Erhöhung des Gleitschwellenwerts des Mörtels (31) zwischen dem Einspritzabschnitt des Abbindebeschleuniger-Additivs (39) und dem Ende (29) der Düse (23) bewirkt.

2. Verfahren nach Anspruch 1, wobei die Extrusionseinheit (5) einen Mörtelmischer (17) beinhaltet, der stromaufwärts der Extrusionsdüse (23) angeordnet ist.

3. Verfahren nach Anspruch 2, wobei die Extrusionseinheit (5) einen Verengungsbereich (21) beinhaltet, der zwischen dem Mischer (17) und der Extrusionsdüse (23) angeordnet ist.

4. Verfahren nach Anspruch 3, wobei die Einspritzmittel des Abbindebeschleuniger-Additivs (34) einen Einspritzkopf (39) umfassen, der zwischen dem Mischer (17) und dem Verengungsbereich (21) angeordnet ist, um das Abbindebeschleuniger-Additiv (34) einzuspritzen.

5. Verfahren nach Anspruch 1, wobei die Extrusionsdüse (23) radiale Brücken (33) beinhaltet, die mit Öffnungen (27) zur Einführung der Fasern (9) ausgestattet sind.

6. Verfahren nach Anspruch 1, wobei die Extrusionsdüse (23) periphere Öffnungen (27) zur Einführung der Fasern (9) beinhaltet.

7. Verfahren nach Anspruch 1, wobei die Vorrichtung ein Magazin (13) von Spulen (11) beinhaltet, auf die die Fasern (9) aufgewickelt sind, und Elemente zur Führung (15a, 15b, 15c) der Fasern (9) der Spulen (11) zur Extrusionsdüse (23).

8. Verfahren nach Anspruch 2, die Verwendung eines Systems zum Zuführen und Pumpen (7) des Mörtels (31) zum Mischer (17) beinhaltend.

9. Verfahren nach Anspruch 1, wobei es die Haftung der Fasern (9) mit dem Mörtel (31) ist, die diese Fasern in den Wulst treibt.

10. Verfahren nach Anspruch 1, wobei die Fasern (9) vor der Extrusion mit dem Mörtel (31) einer Oberflächenbehandlung und/oder einer mechanischen Behandlung unterzogen werden.

11. Verfahren nach Anspruch 1, wobei biegeflexible Fasern (9) verwendet werden, die in den Kern des Mörtels (31) eingeführt werden.

12. Verfahren nach Anspruch 1, wobei biegestarre Fasern (9) verwendet werden, die in den Umfang des Mörtels (31) eingeführt werden.

13. Verfahren nach Anspruch 1, wobei die Fasern (9) aus der Gruppe ausgewählt werden, die einzelne oder verseilte Fasern aus Kohlenstoff, Metall, Glas, Basalt, und Polymer umfasst.

## Claims

1. Method for additive manufacturing by extrusion an anisotropic fibrous concrete, using a device comprising an extrusion assembly (5) including an extrusion nozzle (23) for extruding a bead of mortar (31) jointly with continuous fibres (9) oriented along the longitudinal direction of this bead, **characterized in that** the device comprises a multi axis robot (1) having a head (3) bearing the said extrusion assembly (5), and **in that** the said extrusion assembly (5) comprises means for the injection in the mortar (31) of a setting accelerator additive (34), the injection of the setting accelerator additive (39) causing an at least sixfold multiplication of the shear threshold of the mortar (31) between the region of injection of the setting accelerator additive (39) and the end (29) of the nozzle (23).

2. Method according to claim 1, wherein the extrusion assembly (5) comprises a mortar mixer (17) situated upstream of the extrusion nozzle (23).

3. Method according to claim 2, wherein said extrusion assembly (5) comprises a constriction area (21) situated between said mixer (17) and said extrusion nozzle (23).

4. Method according to claims 3 and 4, wherein the means for injecting the set accelerating additive (34) comprise an injection head (39) which is situated between the mixer (17) and the constriction area (21) for injecting the setting accelerator additive (34).

5. Method according to claim 1, wherein said extrusion nozzle (23) comprises radial bridges (33) provided with orifices (27) for introducing said fibres (9).

6. Method according to claim 1, wherein said extrusion nozzle (23) comprises peripheral orifices (27) for introducing said fibres (9).

7. Method according to claim 1, wherein the device comprises a magazine (13) of coils (11) on which said fibres (9) are wound, and members for guiding (15a, 15b, 15c) said fibres (9) from said coils (11) to said extrusion nozzle (23).

8. Method according to claim 2, comprising the provision of a system for supplying and pumping (7) said mortar (31) to said mixer (17).

9. Method according to claim 1, wherein it is the adherence of the fibres (9) with the mortar (31) that drives these fibres into the bead.

10. Method according to claim 1, wherein said fibres (9) are subjected to a surface treatment and/or to a mechanical treatment before extrusion with said mortar (31).

11. Method according to claim 1, wherein flexible for bendingfibres (9) are used that are introduced into the heart of said mortar (31).

12. Method according to claim 1, wherein rigid for bending fibres (9) are used that are introduced into the periphery of said mortar (31).

13. Method according to claim 1, wherein said fibres (9) are chosen from the group comprising fibres made of carbon, metal, glass, basalt, polymer, unitary or stranded.
